(19) Europäisches Patentamt
European Patent Office
Office européen des brevets

(11) Publication number: **0 136 773**
**B1**

(12) **EUROPEAN PATENT SPECIFICATION**

(45) Date of publication of patent specification: **11.11.87**

(51) Int. Cl.[4]: **C 08 K 5/00,** C 08 K 13/02, E 21 B 43/25, E 21 B 43/22

(21) Application number: **84303786.2**

(22) Date of filing: **05.06.84**

(54) **Composition for cross-linking carboxyl polymers and the use thereof in treating subterranean formations.**

(30) Priority: **23.08.83 US 525596**
**23.08.83 US 525597**

(43) Date of publication of application:
**10.04.85 Bulletin 85/15**

(45) Publication of the grant of the patent:
**11.11.87 Bulletin 87/46**

(84) Designated Contracting States:
**DE FR GB IT NL**

(56) References cited:
**GB-A-1 093 465**
**GB-A-2 108 122**
**US-A-3 833 061**
**US-A-4 324 668**

(73) Proprietor: **HALLIBURTON COMPANY**
**P.O. Drawer 1431**
**Duncan Oklahoma 73536 (US)**

(72) Inventor: **Almond, Stephen William**
**Route 5, Box 591**
**Duncan Oklahoma 73533 (US)**
Inventor: **Hanlon, David James**
**712 North "C" Street**
**Duncan Oklahoma 73533 (US)**

(74) Representative: **Wain, Christopher Paul et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 136 773 B1

Courier Press, Leamington Spa, England.

**Description**

This invention relates to a method of treating a subterranean formation to reduce its permeability to water, and to compositions for cross-linking polymers useful for this purpose.

Only a portion of the oil contained in a subterranean reservoir can be recovered by primary methods, and it has therefore become general practice to employ various secondary or tertiary recovery techniques to produce the additional quantities of oil not economically recovered by primary methods. Of the various secondary or tertiary recovery methods available, one of the most widely practised techniques is the displacement of oil from the reservoir with a driving fluid such as a floodwater injected for that purpose. Normally, in carrying out the flooding process, input or injection wells are utilized. These wells can be old existing wells or can be wells which are newly drilled into the oil-producing strata. The injection wells locations with reference to the production wells are selected to afford a desired flood pattern, the selected pattern depending in part upon field conditions, the locations of existing wells, and the operator's preference. Aqueous drive fluids, such as water, brine or a viscous aqueous fluid are forced into the input wells under pressure, and out into the surrounding oil bearing strata towards the producing well or wells. While waterflooding has been rather widely practised in recent years, it is not without considerable operating problems and economical limitations, particularly those associated with low oil recoveries in proportion to the amount of water injected. Various surfactant and solvent floods have been proposed as means for recovering additional quantities of oil over that recoverable by conventional waterflooding. However, these processes face serious operating problems when practised in heterogeneous formations containing strata or channels having permeability substantially higher than the bulk of the formation.

One of the major problems encountered in a flooding operation is the breakthrough of the flooding medium from the flood front to the producing well relatively early in the displacement process, and rapidly increasing producing water/oil ratios following the initial breakthrough. These difficulties result from the displacing medium channeling or fingering through the oil-bearing structure to the producing well, thus bypassing large zones of the oil-bearing strata. The reason for the channeling of the flooding medium to the producing wells and the resulting low oil recovery is due in part to the peculiar structure of the oil-bearing stata. Underground oil reservoirs, in most cases, consist of layers of sand or rock and, since no reservoir rock is perfectly uniform in composition and structure, the permeability will vary across the rock face or strata. Also, fractures, cracks, and other abnormalities can promote channeling of the displacement of the fluid.

In the normal flooding operation, maximum oil recovery is obtained when the driven fluid goes up in a wide bank in front of the driving fluid which moves uniformly towards the producing well. To keep this bank of oil intact and constantly moving towards the producing well, a substantially uniform permeability must exist throughout the strata. If this uniform permeability does not exist, or is not provided, the flooding fluid will seek the areas of high permeability, and channeling occurs with the subsequent loss of some driving fluid energy and the appearance of excessive amounts of driving fluid in the producing well. Moreover, as the more permeable strata are depleted, the driving fluid has a tendency to follow channels and further increase the consumption of the flooding medium to the point where the process becomes uneconomical. It is, therefore, desirable to operate at a drive fluid to oil ratio that is as low as possible.

Another problem associated with the production of oil from oil-bearing formations containing highly permeable water channels communicating the production well with the water zone is the intrusion of water into the well. Not only does this water intrusion cause production and disposal problems, but more importantly the beneficial effect of the natural water drive is at least, in part, lost thereby adversely affecting oil recovery.

It is advantageous to reduce the permeability of the water channels so as to render the formation more uniformly permeable and to increase the unit efficiency of the water drive, or alternatively to shut off the water intrusion.

Many processes have been proposed for reducing the permeability of a subterranean formation. For instance, U.S. Patent 3,762,476 discloses that the quantity of water recovered from a subterranean formation penetrated by a well bore can be reduced by injecting into the subterranean formation a first thickened aqueous solution, a complexing ionic solution of multivalent cations and retarding anions, a brine slug, and a second thickened aqueous solution. Complexing ionic solutions disclosed in the patent have a multivalent metal cation selected from the group consisting of $FE^{2+}$, $Fe^{3+}$, $Al^{3+}$, $Ti^{4+}$, $Zn^{2+}$, $Sn^{4+}$, $Ca^{2+}$, $Mg^{2+}$, and $Cr^{3+}$ and a retarding anion selected from the group consisting of acetate, nitrilotriacetate, tartrate, citrate and phosphate.

U.S. Patent 3,833,061 discloses a method for selectively reducing the permeability of an oil-wet subterranean formation penetrated by at least one well bore by passing an oxidizing agent through and into contact with the formation for oxidizing and removing hydrocarbons from the surfaces of the formation and thereafter contacting the treated formation surfaces with a crosslinked polymer. The patent discloses the use of aluminum citrate as a crosslinking composition.

We have now found that the permeability to water of subterranean formations can be modified advantageously by treating the formations with mixtures of carboxyl functionality polymers and certain crosslinking compositions which we have devised.

According to the invention, there is provided a composition for crosslinking a water-dispersible,

hydrophilic organic polymer having a molecular weight greater than 100,000 and containing carboxyl functionality, which composition comprises water, a zirconium compound and a secondary or tertiary hydroxyalkylamine, characterised in that the composition comprises:

(a) one or more of the following zirconium compounds: zirconium oxychloride, zirconium acetate, zirconium tetrachloride, zirconium ortho-sulfate, zirconium carbonate and zirconium ammonium carbonate;

(b) one or more of the hydroxyalkyl amines of the formula:

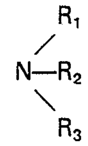

wherein

$R_1$ is a hydroxyalkyl group having 1 to 3 carbon atoms;

$R_2$ is an alkyl or hydroxyalkyl group having 1 to 3 carbon atoms; and,

$R_3$ is hydrogen or an alkyl or hydroxyalkyl group having 1 to 3 carbon atoms, and

(c) one or more alpha-hydroxy acids of the formula:

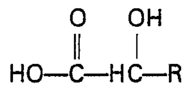

wherein

R is hydrogen or an alkyl group having 1 to 3 carbon atoms.

The permeability of a subterranean formation penetrated by at least one well bore is reduced, in accordance with the invention, by treating the formation surfaces with a mixture of the polymer and the crosslinking composition. The method of the invention can be used in either injection wells or water floods or hydrocarbon production wells, for example for the purpose of reducing the water-oil ratio produced therefrom, e.g. reduce the mobility of water in the wellbore area.

In one preferred embodiment of the invention, the subterranean formation is contacted sequentially first with water and the water dispersible hydrophilic organic polymer, then with the crosslinking composition, and finally with a second mixture of water and the hydrophilic organic polymer.

Polymers suitable for use in the present invention can generally be described as water-dispersible hydrophilic organic polymers having a molecular weight greater than 100,000 and containing carboxyl functionality whereby the polymers can be crosslinked with zirconium compounds having a valence of +4. Examples of such polymers include carboxyalkyl guar wherein the alkyl group has 1 to 3 carbon atoms, carboxyalkylhydroxyalkyl guar where the alkyl groups have 1 to 3 carbon atoms, xanthan gum, polyacrylamide and polymethacrylamide wherein from 5 to 75 percent of the carboxylamide groups of the polyacrylamide and polymethacrylamide are hydrolyzed to carboxyl groups, cellulose ether polymers containing carboxyl functionality, and copolymers resulting from the polymerization of acrylamide or methacrylamide with acrylic acid and/or methacrylic acid.

The polymers used are preferably substantially free of crosslinking between the polymer chains. As used herein and in the claims, unless otherwise specified, the term "hydrolyzed" includes modified polymers wherein the carboxyl groups are in the acid form and also polymers wherein the carboxyl groups are in the salt form, provided such salts are water dispersible. Such salts include ammonium salts, alkali metal salts, and others which are water dispersible. Hydrolysis can be carried out in any suitable fashion, for example, by heating an aqueous solution of the polymer with a suitable amount of sodium hydroxide.

Examples of cellulose ethers which can be used to carry out the invention include, for example, carboxyalkyl cellulose ethers such as carboxymethyl cellulose (CMC), and mixed ethers such as carboxyalkylhydroxyalkyl cellulose ethers such as carboxymethylhydroxyethyl cellulose (CMHEC). Many of these cellulose ethers that contain carboxyl functionality are commercially available and are available as the alkali metal salt, usually the sodium salt. The metal is seldom referred to and they are commonly referred to as CMC or CMHEC.

The copolymers of acrylic acid, methacrylic acid or combinations thereof with acrylamide, methacrylamide or combinations thereof are made up with from 5 to 70 percent by weight of acrylic acid, methacrylic acid and combinations thereof and most preferably from about 10 to about 40 percent by weight of acrylic acid, methacrylic acid and combinations thereof.

Included among the polyacrylamides that can be used in the present invention are polyacrylamides and related polymers which are water soluble. Presently preferred polymers include homopolymers and copolymers of acrylamide and methacrylamide. These polymers can contain from 5 percent to 75 percent and preferably about 40 percent of the carboxamide groups hydrolyzed to carboxyl groups.

The most preferred polymer for carrying out the method of the invention is polyacrylamide wherein 7 percent or 30 percent of the carboxamide groups are hydrolyzed to carboxyl groups. The amount of carboxyl functionality will depend on the formation to be treated.

Mixtures of the above-described polymers can be used in the practice of the invention.

The polymers must have a molecular weight of at least 100,000, but the upper limit of the molecular weight is not critical as long as the polymer is water dispersible and the aqueous gel prepared therefrom can be pumped. Thus, polymers having a molecular weight as high as 20 million or higher, in many said conditions can be used.

The amount of the polymers used in the practice of the invention can vary widely depending on the particular polymer desired, purity of the polymer, and the properties desired in the gels. Generally speaking, amounts in the range of from 0.0025 to about 5.0, preferably from 0.01 to 1.5, or preferably 0.025 to about 0.4 weight percent based on the weight of water can be used. Amounts outside this range, however, can be used. Small amounts of polymer will usually produce liquid mobile gels which can be readily pumped where as large amounts of polymer will usually produce thick, viscous, somewhat elastic gels. The thick gels can be thinned by the dissolution of water to any desired concentration of polymer and this can be done by mechanical means suhc as stirring, pumping, or by means of a suitable turbulence inducing device to cause shearing such as a jet nozzle. Thus, there is really no fixed upper limit on the amount of polymer which can be used.

The preferred zirconium compound in the crosslinking compositions of the invention is zirconium oxychloride. Examples of suitable alpha-hydroxy acids which can be utilized in the present invention are lactic acid and glycolic acid, the preferred acid being lactic acid.

Examples of suitable amines are diethanolamine, triethanolamine, and dimethylethanolamine. The preferred amine is triethanolamine.

At elevated temperatures, it is sometimes desirable that the crosslinking composition be delayed for longer periods of time in which case citric acid or malic acid (or both) can advantageously be added to the composition.

The zirconium compound used in the crosslinking composition has a +4 valence. Although the crosslinking mechanism is not totally understood, it is believed that the valence of the zirconium compound does not change during the crosslinking of the composition with the polymers.

While it is not intended to limit the invention by any theories as to the nature of the mechanisms, it is presently believed that the amine and acid used in the crosslinking composition complex with, chelate, or otherwise react with the zirconium ions having a valence of +4. It is believed that amine and acid are thus in competition with the polymers and temporarily reduce the number of ions available for reaction with the polymer and thus delay the crosslinking reaction.

The quantity of zirconium compound having a valence of +4, acid and amine used in the crosslinking compositions of the present invention may vary over a wide range. Generally, for 1 mole of zirconium metal ion, there will be used 2 to 5 moles of the alphahydroxy acid and 1 to 5 moles of the amine. When citric acid or malic acid are also present, .25 moles to 2 moles are utilized per 1 mole of zirconium metal ion. A particularly preferred crosslinking composition comprises zirconium oxychloride and, for each one mole of zirconium metal ion having a valence of +4, about 2 moles of lactic acid, and about 2 moles of triethanolamine. When it is desired to add citric acid or malic acid to such a composition, preferably about 0.25 moles are added.

The amount of crosslinking composition used to carry out the method of the invention will vary over a wide range and therefore the amounts will vary according to the formation to be treated. Usually, however, good results have been achieved when the crosslinking composition is employed in amounts of from about 1.0 to about 100.0, more preferably, from about 2.0 to about 50.0, percent by weight of the total polymer.

The crosslinking composition is prepared preferably by adding to an amount of water which is sufficient to allow sufficient mixing of ingredients of the crosslinking composition the alpha-hydroxy acid and adjusting the pH of the acid mixture from about 5 to about 8, and preferably 7, with a basic compound such as sodium hydroxide or preferably ammonium hydroxide to form a first mixture. The zirconium compound, when zirconium oxychloride, zirconium acetate, zirconium ortho-sulfate and zirconium tetrachloride are utilized, is preferably the next ingredient added to the first mixture to form a second mixture. Finally the amine compound is preferably added to the second mixture containing the zirconium compound to form a third mixture. The pH of the second mixture can be adjusted using a basic compound such as sodium hydroxide or preferably ammonium hydroxide or the pH of the second mixture can be adjusted by the addition of the amine compound. Although the crosslinking composition can be used at a pH greater than 8 or less than 5, it is important that the mixing of the first and second mixtures be carried out at a pH from about 5 to about 8, and preferably at about 7. When citric acid or malic acid is utilized in the crosslinking composition, it is added to the third mixture after the pH has been adjusted from about 5 to about 8.

When zirconium carbonate or zirconium ammonium carbonate is utilized in the crosslinking composition, the crosslinking composition is preferably prepared by first adding the zirconium carbonate or the zirconium ammonium carbonate to water to form a first mixture, next adding the amine compound to the first mixture to form a second mixture, and adjusting the pH of the second mixture from about 5 to about 8, usually with an acid such as hydrochloric acid, and, finally adding the alpha-hydroxy acid to the second mixture to form a third mixture and adjusting the pH of the third mixture from about 5 to about 8.

The term "water" is used generally herein and in the Claims, unless otherwise specified, to include brines and fresh water.

On some occasions, the surfaces of the formation to be treated are covered with materials such as hydrocarbons. If this covering is removed from the surface prior to the treatment, a treatment wherein the permeability of the formation is reduced is better achieved. Therefore, sometimes an agent is utilized which removes the hydrocarbons from the surfaces of the formation prior to the treatment. Agents which can be used include oxidizing agents such as hydrogen peroxide, potassium permanganate and nitric acid, for example. These agents are well known in the art and the selection of the agent will depend on the formation to be treated.

The polymer solutions can be prepared in either fresh-water or brine. Any suitable procedure for preparing the polymer solution can be used.

In one embodiment of the present invention, the mixture comprising water and the water dispersible hydrophilic organic polymers having a molecular weight greater than 100,000 and containing carboxyl functionality are mixed with the crosslinking composition and the resulting mixture is injected through a well into the subterranean formation. The mixture is directed to that portion of the subterranean formation where it is desired that the permeability be altered. After the injection of the above-described mixture, a spacer fluid is preferably injected into the well to displace the mixture from the tubing and out into the formation. Preferably the volume of the spacer fluid is the volume needed to displace all the treating fluids out in the formation plus 2607m$^3$ per vertical metre (five barrels per vertical foot) of interval to be treated. The well is then preferably shut in for about 48 hours.

In another embodiment of the present invention, a first mixture comprising water and a water dispersible hydrophilic organic polymer having a molecular weight greater than 100,000 and containing carboxyl functionality is injected through a well into the subterranean formation whereby the polymer contacts that portion of the formation where the change in permeability is desired. Optionally, a spacer fluid such as a brine solution is next injected into the well and thus contacts the formation. After the spacer fluid injection is completed, the crosslinking compound containing the zirconium compound having a valence of +4, amine, and alpha-hydroxy acid is injected into the well bore and into the formation whereby the crosslinking composition contacts the polymer in the formation. Finally, a second mixture comprising water and a water dispersible hydrophilic organic polymer having a molecular weight greater than 100,000 and containing carboxyl functionality is injected into the well and into the formation. The steps of injecting the crosslinking composition and the second organic polymer can be repeated if necessary. This embodiment is used primarily for treating waterflood injection wells.

Spacer fluids that can be used in the present invention are well known in the art and include brine solutions, alkali metal halide solutions and the like.

The amount of total polymer used to carry out the method of the present invention will vary over a wide range depending upon the formation to be treated.

In order that the invention may be more fully understood, the following Examples are given by way of illustration only.

Example 1

A series of aqueous gels were prepared using the crosslinking composition of the present invention and various polymers.

The crosslinking composition used in Tests 1 through 6 and 9 through 13 was prepared by adding the alphahydroxy acid to water to form a first mixture, and adjusting the pH of the first mixture to about 7, adding the zirconium compound to the first mixture to form a second mixture, and adding the amine to the second mixture to form a final mixture and adjusting the pH of the final mixture to about 7.

The crosslinking composition used in Test 7 was prepared by adding an aqueous solution of lactic acid to zirconium acetate to form a first mixture, heating the first mixture to about 43°C (110°F) for 10 minutes, adjusting the pH of the first mixture to about 6, and adding the amine to the first mixture to form a second mixture. The pH of the second mixture was checked to ensure a final pH of about 7.

The crosslinking composition used in Test 8 was prepared by adding zirconium carbonate to water to form a first mixture, adding triethanolamine to the first mixture to form a second mixture and adjusting the pH of the second mixture to about 7 with hydrochloric acid and adding lactic acid to the second mixture to form a third mixture and adjusting the pH of the third mixture to about 7.

The crosslinking composition was added to an aqueous polymer solution. The crosslinking composition and polymer were then mixed at ambient temperature except for Test 8.

The crosslinking of the polymer by the crosslinking composition was visually determined by observing at a specific time the increase in viscosity of the solution containing the crosslinking composition and the polymer.

The results of these tests are shown in Table I.

TABLE I

| Test No. | Crosslinking Compound: Zirconium Compound (1 mole) | Crosslinking Compound: Alphahydroxy Acid (moles used) | Crosslinking Compound: Amine (moles used) | Polymer (% hydrolyzed) | Weight Ratio of Crosslinking Compound to Polymers | Gelling Time (Minutes) | Remarks |
|---|---|---|---|---|---|---|---|
| 1 | Zirconium Oxychloride | lactic acid (2) | triethanolamine (1) | polyacrylamide (9%) | 140/2,000 | 40 | Stable gel without precipitate |
| 2 | Zirconium Oxychloride | lactic acid (2) | triethanolamine (2) | polyacrylamide (9%) | 100/2,500 | | Stable gel without precipitate |
| 3 | Zirconium Oxychloride | lactic acid (3) | triethanolamine (1) | polyacrylamide (9%) | 100/2,500 | 20 | Stable gel without precipitate |
| 4 | Zirconium Oxychloride | lactic acid (3) | diethanolamine (1) | polyacrylamide (9%) | 100/2,500 | 10 | Stable gel without precipitate |
| 5 | Zirconium Oxychloride | lactic acid (3) | dimethyl-ethanolamine (1) | polyacrylamide (9%) | 100/2,500 | 20 | Stable gel without precipitate |
| 6 | Zirconium Oxychloride | glycolic acid (3) | triethanolamine (1) | polyacrylamide (9%) | 100/2,500 | 15 | Stable gel without precipitate |
| 7 | Zirconium Acetate | lactic acid (3) | triethanolamine (1) | polyacrylamide (9%) | 100/2,500 | 15 | Stable gel without precipitate |
| 8 | Zirconium Carbonate | lactic acid (3) | triethanolamine (1) | polyacrylamide (9%) | 100/2,500 | 15—20* | Stable gel without precipitate |

TABLE I (Continued)

| Test No. | Crosslinking Compound: Zirconium Compound (1 mole) | Crosslinking Compound: Alphahydroxy Acid (moles used) | Crosslinking Compound: Amine (moles used) | Polymer (% hydrolyzed) | Weight Ratio of Crosslinking Compound to Polymers | Gelling Time (Minutes) | Remarks |
|---|---|---|---|---|---|---|---|
| 9 | Zirconium Oxychloride | lactic acid (3) | triethanolamine (1) | carboxymethyl cellulose DS = 0.9 | 150/6,000 | 1 | Stable gel without precipitate |
| 10 | Zirconium Oxychloride | lactic acid (3) | triethanolamine (1) | carboxymethyl-hydroxyethyl cellulose DS = 0.4 MS = 2.0 | 150/6,000 | 10 | Stable gel without precipitate |
| 11 | Zirconium Oxychloride | lactic acid (3) | triethanolamine (1) | carboxymethyl-hydroxypropyl guar DS = 0.3 MS = 0.6 | 150/6,000 | 1 | Stable gel without precipitate |
| 12 | Zirconium Oxychloride | lactic acid (3) | triethanolamine (1) | hydroxypropyl guar MS = 0.4 | 150/6,000 | 2 | Stable gel without precipitate |
| 13 | Zirconium Oxychloride | lactic acid (3) | triethanolamine (1) | Xanthan | 100/5,000 | 2 | Stable gel without precipitate |

* Tests carried out at 82°C (180°F)

DS means degree of substitution. For example, each anhydroglucose unit in a cellulose molecule has three reactive hydroxyl groups. The number of reactive sites that are substituted in any reaction is the "degree of substitution". The value is determined by adding up the substituted sites on 10 molecules and then determining the average for the 10 individual units.

MS is the moles of substituent combined with a particular molecule. In the case of anhydroglucose, hydroxyethyl groups can be introduced in two days. Ethylene oxide can react at a hydroxyl and be added at that site. Then, ethylene oxide can react at the previously substituted hydroxyl and polymerize into a side chain. The average number of moles added to each unit by substitution or side chain growth is called the moles of substituent combined or "MS".

Example II

A test was conducted to determine the residual resistance factor (RRF) of two cores using the method of the present invention. The cores were connected in series with one another and contained Healdton Sand from Carter County, Oklahoma, and were about 2.4 cm (15/16") in diameter and about 5.1 cm (2") in length.

The test was carried out by the following steps:

a. Pump through the cores a brine solution until a constant flow rate of 1 ml/min was achieved. The brine solution had the following composition:

| Salt | g/l |
|---|---|
| NaCl | 52.3 |
| $CaCl_2$ | 11.96 |
| $MgCl_2 \cdot 6H_2O$ | 6.52 |
| $NaHCO_3$ | 0.45 |

b. Pump through the cores at a constant flow rate of 1 ml/min an aqueous solution comprising 500 ppm of a copolymer of 90% by weight polyacrylamide and 10% by weight acrylic acid and 2% by weight of a crosslinking composition. The crosslinking composition comprised 1 mole of zirconium oxychloride, 3 moles of lactic acid, and 1 mole of triethanolamine. Eight pore volumes (based on the pore volume of both cores) of the aqueous solution were pumped through the cores.

c. Shut in the cores overnight.

d. Pumped a brine solution through the cores until a constant flow rate of 1 ml/min was achieved.

The results of this test were measured in residual resistance factor (RRF).

$$RRF = \frac{\text{permeability before treatment}}{\text{permeability after treatment}}$$

The permeabilities for the RRF were measured by the pumping pressure through the cores, before and after treatment.

The RRF after treatment for the first core leveled off at about 12.9 and the RRF leveled off for the second core, which was the second core connected in the series, to about 5.5.

Example III

A test was conducted to determine the residual resistance factor (RRF) of two cores using the method of the present invention. The cores were connected in series with one another, contained standard Berea sandstone, and were about 2.4 cm (15/16") in diameter and about 10.2 cm (4") in length.

The test was carried out by the following steps:

a. Pump through the cores a brine solution until a constant flow rate of 1 ml/min was achieved. The brine solution had the following composition:

| Salt | g/l |
|---|---|
| NaCl | 69.3 |
| $CaCl_2$ | 5.3 |
| $MgCl_2 \cdot 6H_2O$ | 4.0 |

b. Pump through the cores at a constant flow rate of 1 ml/min. About 2.5 pore volumes (based on the pore volume of both cores) of an aqueous solution comprising 1,000 ppm of a polymer comprising 30 percent hydrolyzed polyacrylamide.

c. Pump through the cores at a constant flow rate of 1 ml/min one pore volume (based on the pore volume of both cores) of a brine solution. The brine solution had the same composition as the brine of Step a.

d. Pump through the cores, at a constant flow rate of 1 ml/min, 1.5 pore volume (based on the pore volume of both cores) of an aqueous solution comprising 500 ppm of a crosslinking composition. The crosslinking composition had the same ingredients and proportions as the crosslinking composition of Step b of Example II.

e. Pump through both cores, at a constant flow rate of 1 ml/min one pore volume (based on the pore volume of both cores) of a brine solution. The brine solution had the same composition as the brine of Steps a and c.

f. Pump through the cores, at a constant flow rate of 1 ml/min. About 2.5 pore volumes (based on the pore volume of both cores) of an aqueous solution comprising 1,000 ppm of a polymer comprising 30 percent hydrolyzed polyacrylamide.

g. Shut in the cores overnight.

h. Pump a brine solution through the cores until a constant flow rate of 1 ml/min was achieved.

The results of the test were measured in residual resistance factor (RRF) in the same manner as Example II.

The RRF of the first core leveled off at about 22.5 and the RRF of the second core leveled off at about 3.8.

It is to be understood that, where units are expressed herein both in S.I.-units and in non-S.I.-units, the Applicants' original units are the non-S.I.-units, the S.I.-units being given for equivalency purposes only.

**Claims**

1. A composition for crosslinking a water-dispersible, hydrophilic organic polymer having a molecular weight greater than 100,000 and containing a carboxyl functionality, which composition comprises water, a zirconium compound and a secondary or tertiary hydroxyalkylamine, characterised in that the composition comprises

(a) one or more of the following zirconium compounds: zirconium oxychloride, zirconium acetate, zirconium tetrachloride, zirconium ortho-sulfate, zirconium carbonate and zirconium ammonium carbonate;

(b) one or more of the hydroxyalkylamines of the formula:

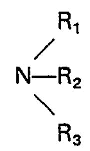

wherein

$R_1$ is a hydroxyalkyl group having 1 to 3 carbon atoms;

$R_2$ is an alkyl or hydroxyalkyl group having 1 to 3 carbon atoms; and,

$R_3$ is hydrogen or an alkyl or hydroxyalkyl group having 1 to 3 carbon atoms, and

(c) one or more alpha-hydroxy acids of the formula:

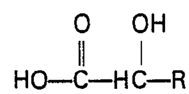

wherein

R is hydrogen or an alkyl group having 1 to 3 carbon atoms.

2. A composition according to claim 1, which comprises lactic acid or glycolic acid, or a mixture of these two alpha-hydroxy acids.

3. A composition according to claim 1 or 2, which comprises diethanolamine, triethanolamine or dimethylethanol amine, or any mixture of two or all of these amines.

4. A composition according to claim 1, 2 or 3, in which the proportions are 2 to 5 moles of the alpha-hydroxy acid(s), and 1 to 5 moles of the amine(s) for each 1 mole of zirconium metal ion.

5. A composition according to claim 1, 2, 3 or 4, which also contains citric acid or malic acid or a mixture of the two, the proportions of these two acids being from 0.25 moles to 2 moles for each 1 mole of zirconium metal ion.

6. A mixture of one or more water-dispersible, hydrophilic, organic polymers having a molecular weight greater than 100,000 and containing carboxyl functionality, with a composition for crosslinking the polymer, characterised in that the composition is as claimed in any of claims 1 to 5.

7. A mixture according to claim 6, wherein the or each said water-dispersible hydrophilic organic polymer is carboxyalkyl guar wherein the alkyl group has 1 to 3 carbon atoms, carboxyalkylhydroxyalkyl guar wherein the alkyl groups have 1 to 3 carbon atoms, xanthan gum, polyacrylamide wherein 5 to 75 percent of the carboxamide groups are hydrolyzed to carboxyl groups, polymethacrylamide wherein 5 to 75 percent of the carboxamide groups are hydrolyzed to carboxyl groups, cellulose ethers, a copolymer of 5 to 70 percent by weight acrylic or methacrylic acid and acrylamide or methacrylamide.

8. A method of altering the permeability of subterranean formation, which method comprises contacting said formation with an aqueous mixture comprising:

a. a water-dispersible, hydrophilic, organic polymer having a molecular weight greater than 100,000 and containing carboxyl functionality; and

b. a composition for crosslinking the polymer, characterised in that the composition is as claimed in any of claims 1 to 5.

9. A method of altering the permeability of a subterranean formation, which method comprises sequentially contacting the formation with a first aqueous mixture comprising a water-dispersible hydrophilic organic polymer having a molecular weight of at least 100,000 and containing carboxyl functionality; and a composition for crosslinking the polymer; characterised in that the said composition is as claimed in any of claims 1 to 5, and wherein after contacting the formation with the said composition, it is contacted with a second aqueous mixture comprising a water-dispersible hydrophilic organic polymer having a molecular weight of at least 100,000 and containing carboxyl functionality.

**Patentansprüche**

1. Vernetzungsmittel für ein in Wasser dispergierbares, hydrophiles organisches Polymer mit einem Molekulargewicht über 100 000 und Carboxylfunktionen, enthaltend Wasser, eine Zirkoniumverbindung und ein sekundäres oder tertiäres Hydroxyalkylamin, gekennzeichnet durch:

(a) eine oder mehrere der nachfolgenden Zirkoniumverbindungen: Zirkoniumoxychlorid, Zirkoniumacetat, Zirkoniumtetrachlorid, Zirkoniumorthosulfat, Zirkoniumcarbonat, Zirkoniumammoniumcarbonat;

(b) ein oder mehrere Hydroxyalkylamine der Formel

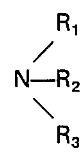

in der

$R_1$ eine Hydroxyalkylgruppe mit 1 bis 3 Kohlenstoffatom,

$R_2$ eine Alkyl- oder Hydroxyalkylgruppe mit 1 bis 3 Kohlenstoffatomen und

$R_3$ Wasserstoff oder eine Alkyl- oder Hydroxyalkylgruppe mit 1 bis 3 Kohlenstoffatomen ist, und

(c) eine oder mehrere α-Hydroxysäuren der Formel

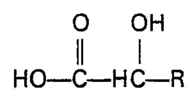

in der R Wasserstoff oder eine Alkylgruppe mit 1 bis 3 Kohlenstoffatomen ist.

2. Vernetzungsmittel nach Anspruch 1, gekennzeichnet durch Milchsäure oder Glykolsäure oder eine Mischung dieser beiden α-Hydroxysäuren.

3. Vernetzungsmittel nach Anspruch 1 oder 2, gekennzeichnet durch Diethanolamin, Triethanolamin, Dimethylethanolamin oder eine Mischung aus zwei oder allen diesen Aminen.

4. Vernetzungsmittel nach Anspruch 1, 2 oder 3, dadurch gekennzeichnet, daß im Verhältnis 2 bis 5 Mol der α-Hydroxysäure(n) und 1 bis 5 Mol des Amins bzw. der Amine pro Mol Zirkoniummetallion vorgesehen sind.

5. Vernetzungsmittel nach Anspruch 1, 2, 3 oder 4, gekennzeichnet durch Zitronensäure, Äpfelsäure oder deren Mischung im Verhältnis von 0,25 bis 2 Mol der beiden Säuren pro Mol Zirkoniummetallion.

6. Eine Mischung aus einem oder mehreren in Wasser dispergierbaren, hydrophilen organischen Polymeren mit einem Molekulargewicht über 100 000 und Carboxylfunktionen und einem Vernetzungsmittel für das Polymere, gekennzeichnet durch ein Vernetzungsmittel nach einem der Ansprüche 1 bis 5.

7. Mischung nach Anspruch 6, dadurch gekennzeichnet, daß das oder jedes in Wasser dispergierbare, hydrophile organische Polymer ein Carboxyalkylguar, dessen Alkylgruppen 1 bis 3 Kohlenstoffatome enthalten, ein Carboxyalkylhydroxyalkylguar, dessen Alkylgruppen 1 bis 3 Kohlenstoffatome enthalten, X anthangummi, Polyacrylamid, dessen Carboxamidgruppen zu 5 bis 75% zu Carboxylgruppen hydrolysiert sind, Polymethacrylamid, dessen Carboxamidgruppen zu 5 bis 75% zu Carboxylgruppen hydrolysiert sind, Celluloseether, oder ein Copolymer aus 5 bis 70 Gew.-% Acryl- oder Methacrylsäure und Acrylamid oder Methacrylamid ist.

8. Verfahren zur Änderung der Durchlässigkeit einer unterirdischen Formation, bei dem die Formation mit einer wäßrigen Mischung in Kontakt gebracht wird, welche Mischung

(a) ein in Wasser dispergierbares, hydrophiles organisches Polymer mit einem Molekulargewicht über 100 000 und Carboxylfunktionen und

(b) ein Vernetzungsmittel für das Polymer enthält,

gekennzeichnet durch ein Vernetzungsmittel nach einem der Ansprüche 1 bis 5.

9. Verfahren zur Änderung der Durchlässigkeit einer unterirdischen Formation, bei dem die Formation nacheinander mit einer ersten wäßrigen Mischung, die ein in Wasser dispergierbares, hydrophiles organisches Polymer mit einem Molekulargewicht von wenigstens 100 000 und mit Carboxylfunktionen enthält, und einem Vernetzungsmittel für das Polymer in Kontakt gebracht wird, dadurch gekennzeichnet,

daß das Vernetzungsmittel nach einem der Ansprüche 1 bis 5 zusammengesetzt wird und daß die Formation nach Kontakt mit dem Vernetzungsmittel mit einer zweiten wäßrigen Mischung in Kontakt gebracht wird, die ein in Wasser dispergierbares, hydrophiles organisches Polymer mit einem Molekulargewicht von wenigstens 100 000 und Carboxylfunktionen enthält.

**Revendications**

1. Composition pour réticuler un polymère organique hydrophile et dispersible dans l'eau, ayant un poids moléculaire supérieur à 100.000 et à fonction carboxyle, cette composition comprenant de l'eau, un composé à base de zirconium et une hydroxyalkylamine secondaire ou tertiaire, caractérisée en ce que la composition comprend:

(a) au moins un des composés à base de zirconium suivants: l'oxychlorure de zirconium, l'acétate de zirconium, le tétrachlorure de zirconium, l'orthosulfate de zirconium, le carbonate de zirconium et le carbonate d'ammonium et de zirconium;

(b) au moins une hydroxyalkylamine de formule:

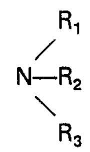

dans laquelle

$R^1$ est un groupe hydroxyalkyle ayant de 1 à 3 atomes de carbone;

$R_2$ est un groupe alkyle ou hydroxyalkyle ayant de 1 à 3 atomes de carbone; et

$R_3$ est un atome d'hydrogène ou un groupe alkyle ou hydroxyalkyle ayant de 1 à 3 atomes de carbone; et

(c) au moins un acide alphahydroxylé de formule:

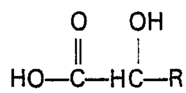

dans laquelle R est un atome d'hydrogène ou un groupe alkyle ayant de 1 à 3 atomes de carbone.

2. Composition suivant la revendication 1, comprenant de l'acide lactique ou de l'acide glycolique ou un mélange de ces deux acides alphahydroxylés.

3. Composition suivant la revendication 1 ou 2, comprenant de la diéthanolamine, de la triéthanolamine ou de la diméthyléthanolamine, ou un mélange quelconque de deux ou de toutes ces amines.

4. Composition suivant la revendication 1, 2 ou 3, dans laquelle les proportions sont de 2 à 5 moles du ou de chaque acide alphahydroxylé et de 1 à 5 moles du ou de chaque amine pour chaque mole d'ions métalliques zirconium.

5. Composition suivant la revendication 1, 2, 3 ou 4, qui comporte également de l'acide citrique ou de l'acide malique ou un mélange de ceux-ci, les proportions de ces deux acides étant de 0,25 mole à 2 moles pour chaque mole d'ions métalliques de zirconium.

6. Mélange d'au moins un polymère organique hydrophile dispersible dans l'eau à fonction carboxyle, ayant un poids moléculaire supérieur à 100.000, avec une composition pour réticuler le polymère, caractérisé en ce que la composition est telle que revendiquée dans l'une quelconque des revendications 1 à 5.

7. Mélange suivant la revendication 6 dans lequel le ou chaque polymère organique hydrophile dispersible dans l'eau, est un carboxyalkyl guar dans lequel le groupe alkyle a de 1 à 3 atomes de carbone, un carboxyalkylhydroxyalkyl guar dans lequel les groupes alkyle ont de 1 à 3 atomes de carbone, une gomme de xanthane, un polyacrylamide dans lequel de 5 à 75% des groupes carboxamide sont hydrolysés en groupes carboxyle, un polyméthacrylamide dans lequel de 5 à 75% des groupes carboxamide sont hydrolysés en groupes carboxyle, des éthers de cellulose, un copolymère de 5 à 70% en poids d'acide acrylique ou d'acide méthacrylique, et d'un acrylamide ou d'un méthacrylamide.

8. Procédé de modification de la perméabilité d'une formation souterraine, dans lequel on met en contact ladite formation avec un mélange aqueux comprenant:

(a) un polymère organique hydrophile dispersible dans l'eau à fonction hydroxyle, ayant un poids moléculaire supérieur à 100.000; et

(b) une composition pour réticuler le polymère, caractérisé en ce que la composition est telle que revendiquée suivant l'une quelconque des revendications 1 à 5.

9. Procédé de modification de la perméabilité d'une formation souterraine, dans lequel on met succesivement en contact la formation avec un premier mélange aqueux comprenant un polymère organique hydrophile dispersible dans l'eau à fonction carboxyle ayant un poids moléculaire d'au moins

100.000; et une composition pour réticuler le polymère; caractérisé en ce que ladite composition est telle que revendiquée suivant l'une quelconque des revendications 1 à 5, et dans lequel après avoir mis en contact la formation avec ladite composition, on la met en contact avec un deuxième mélange aqueux comprenant un polymère organique hydrophile dispersible dans l'eau à fonction carboxyle et ayant un poids moléculaire d'au moins 100.000.